# EUROPÄISCHE PATENTSCHRIFT

(11) **EP 4 047 742 B1**
(45) Veröffentlichungstag und Bekanntmachung des Hinweises auf die Patenterteilung: **03.07.2024**
(21) Anmeldenummer: 21158200.2
(22) Anmeldetag: 19.02.2021
(51) Int. Cl.: H01Q 1/22, H01Q 13/24, H01P 5/08, H01Q 19/08, H01Q 13/02

(54) **RADARMODUL**
RADAR MODULE
MODULE DE RADAR

(43) Veröffentlichungstag der Anmeldung: 24.08.2022
(73) Patentinhaber: VEGA Grieshaber KG, 77709 Wolfach (DE)
(72) Erfinder: WEINZIERLE, Christian, 77709 Wolfach (DE); MÜLLER, Christoph, 77728 Oppenau (DE); WÄLDE, Steffen, 78078 Niedereschach (DE)
(74) Vertreter: Maiwald GmbH

(56) Entgegenhaltungen:
- EP-A1- 2 683 022
- EP-A1- 3 696 515
- EP-B1- 2 683 022
- DE-A1-102006 023 123
- DE-A1-102019 101 276
- US-A1- 2016 261 015

## Beschreibung

### Gebiet der Erfindung

Die Erfindung betrifft Radarmodule für die Prozessautomatisierung, insbesondere für die Prozessmesstechnik und die Automatisierungsindustrie. Insbesondere betrifft die Erfindung ein Radarmodul für die Prozessautomatisierung, ein Füllstandradar mit einem solchen Radarmodul sowie eine Verwendung eines solchen Radarmoduls zur Prozessautomatisierung oder Überwachung eines Raumbereichs.

### Hintergrund

In der Prozessautomation, insbesondere in der Füllstands- und/oder Grenzstandüberwachung, werden eine Vielzahl von Halbleiterchips eingesetzt, welche jedoch möglichst keinen mechanischen Belastungen ausgesetzt sein sollten. Da die Halbleiter aus Kristallen gefertigt sind, sind diese meist sehr brüchig und spröde. Selbst kleinste mechanische Kräfte führen zu Brüchen und somit zur Zerstörung des Halbleiters. Zudem setzen Umwelteinflüsse wie Feuchtigkeit oder Partikel dem Halbleiter zu, so dass unter Umständen seine Funktion nicht aufrechterhalten werden kann. Durch die zunehmende Vielfältigkeit der Anwendungen von Radarchips steigen auch die Einsatzszenarien, in welchen Radarchips eine erhöhte Widerstandsfähigkeit aufweisen sollten. Radarmodule werden neben der Prozessmesstechnik auch zunehmend in der Automatisierungstechnik, bspw. als Abstands- und Geschwindigkeitssensoren eingesetzt.

DE 10 2006 023 123 A1 beschreibt ein Halbleitermodul mit Komponenten für Höchstfrequenztechnik im Kunststoffgehäuse und Verfahren zur Herstellung desselben. Über der Abstrahlplatte ist eine dielektrische Linse vorgesehen.

EP 2 683 022 A1 beschreibt eine gasdichte Hohlleitereinkopplung, ein Hochfrequenzmodul, ein Füllstandradar und eine Verwendung. Im Hohlleiter der Anordnung befindet sich ein dielektrisches Dichtungselement, welches den Hohlleiter gasdicht abdichtet.

US 2016/0261015 A1 beschreibt einen Wellenleiter mit dielektrischer Füllung.

DE 10 2019 101 276 A1 beschreibt eine Wellenleiteranordnung, einen Wellenleiterübergang und eine Verwendung einer Wellenleiteranordnung.

EP 3 696 515 A1 beschreibt ein Radarmodul mit einem Radarsignalleiter, der an der Radarsignalquelle angebracht ist.

### Zusammenfassung

Es ist eine Aufgabe der Erfindung, ein verbessertes Radarmodul bereitzustellen, das insbesondere eine verbesserte Übertragung eines Signals mit einer verbesserten Bandbreite ermöglicht.

Diese Aufgabe wird durch den Gegenstand der unabhängigen Patentansprüche gelöst. Weiterbildungen ergeben sich aus den Unteransprüchen und der nachfolgenden Beschreibung von Ausführungsformen.

Ein erster Aspekt der vorliegenden Offenbarung betrifft ein Radarmodul für die Prozessautomatisierung, das insbesondere für die Prozessmesstechnik und/oder die Automatisierungsindustrie eingerichtet sein kann.

Das Radarmodul weist eine Radarsignalquelle und einen dielektrischen Radarsignalleiter auf. Die Radarsignalquelle ist dazu eingerichtet, ein, insbesondere hochfrequentes, Radarsignal zu erzeugen und auszusenden und/oder zu empfangen. Der dielektrische Radarsignalleiter ist dazu eingerichtet, das von der Radarsignalquelle ausgesendete Radarsignal aufzunehmen, um das Radarsignal an eine Antenne, beispielsweise in Form einer dielektrischen Linse, zu übertragen. Dabei ist der Radarsignalleiter unter Ausbildung eines Zwischenraums in einem vorbestimmten Abstand zur Radarsignalquelle angeordnet und eine der Radarsignalquelle zugewandte Stirnfläche des Radarsignalleiters weist zumindest teilweise eine metallische Schicht auf.

Das Radarmodul ermöglicht eine Übertragung von Signalen, insbesondere im höheren Frequenzbereich von etwa 100 GHz bis etwa 1 THz, vorzugsweise von etwa 120 GHz bis etwa 500 GHz, weiter vorzugsweise von etwa 150 GHz bis etwa 280 GHz. Diese Frequenzbereiche ermöglichen es, kleinere Antennenbauformen zu nutzen, wodurch es möglich ist, die Radarmodule zu verkleinern. Darüber hinaus ergeben sich ein einem höheren Frequenzbereich vorteilhafte absolute und/oder relative Bandbreiten. Insbesondere ist es möglich, einen Übergang mit einer relativen Bandbreite von gleich oder größer als 5% zu erzielen.

Das Radarmodul ist bspw. als ein sogenannter MMIC (*Monolithic Microwave Integrated Circuit*) ausgebildet. Die Radarsignalquelle weist einen Die auf, der ein Teil eines Halbleiterwafers ist.

Der Radarsignalleiter ist bspw. als ein dielektrischer Stift ausgebildet und wirkt wie ein dielektrischer Wellenleiter, der das von der Radarsignalquelle ausgesendete Radarsignal aufnimmt und an eine Antenne und/oder eine dielektrische Linse, optional über einen weiteren Wellenleiter, weiterleitet. Der Radarsignalleiter ist im Wesentlichen aus einem dielektrischen Material, bspw. einem Kunststoff oder einem Kunststoffgemisch, ausgebildet und ist somit gegenüber mechanischer Belastungen robuster als die Radarsignalquelle. Zusätzlich oder alternativ kann der Radarsignalleiter auch ein von der Antenne und/oder der dielektrischen Linse empfangenes Radarsignal an die Radarsignalquelle weiterleiten.

Insbesondere für den Fall, dass die Radarsignalquelle ein, insbesondere hochfrequentes, Radarsignal erzeugt und aussendet, dient die metallische Schicht dazu im Radarsignalleiter ein elektromagnetisches Signal mit einer vorbestimmten Wellenleitermode anzuregen. Elektromagnetische Wellen sind nur in bestimmten Ausrichtung von elektrischem Feld und magnetischen Feld in einem Wellenleiter ausbreitungsfähig. In einem Wellenleiter ausbreitungsfähige elektromagnetische Wellen werden auch als Wellenleitermoden bezeichnet.

Durch den Zwischenraum, der zwischen der Radarsignalquelle, und dem Radarsignalleiter ausgebildet ist, ist die Radarsignalquelle mechanisch von dem Radarsignalleiter entkoppelt, das heißt, eine mechanische Belastung, die auf den Radarsignalleiter einwirkt, wird nicht auf die Radarsignalquelle übertragen. Dadurch ist die Radarsignalquelle vor mechanischen Belastungen durch den Radarsignalleiter geschützt. Der vorbestimmte Abstand zwischen der Stirnseite des Radarsignalleiters und der Radarsignalquelle ist wesentlich für die hochfrequenztechnische Funktionalität des Übergangs, also der Einkopplung des von der Radarsignalquelle ausgesendeten Radarsignals in den Radarsignalleiter, verantwortlich und wird in Abhängigkeit von der Frequenz des zu übertragenden Radarsignals bestimmt. Darüber hinaus ermöglicht der Zwischenraum einen Übergang von der Radarsignalquelle zum Radarsignalleiter, dessen Bandbreite gleich oder größer als 5% ist. Somit ist das Radarmodul auch für radarbasierte Füllstandmessungen und/oder Objekterkennung sowie weitere Anwendungsgebiete, die eine größere Bandbreite erfordern, einsetzbar.

Gemäß einer Ausführungsform weist zumindest der Zwischenraum ein Gas, ein Gasgemisch, ein Fluid oder ein Vakuum auf. Der Zwischenraum kann somit ein dielektrisches Material aufweisen bzw. mit einem dielektrischen Material gefüllt sein, das eine Übertragung eines Radarsignals von der Radarsignalquelle zum Radarsignalleiter oder umgekehrt ermöglicht, und gleichzeitig eine mechanische Entkopplung der Radarsignalquelle von dem Radarsignalleiter gewährleistet. Alternativ kann in dem Zwischenraum auch ein Vakuum vorgesehen sein.

Gemäß der Erfindung besitzt die metallische Schicht an der der Radarsignalquelle zugewandten Stirnfläche eine Aussparung, die ein nicht-metallisches Material aufweist. Insbesondere exponiert die Aussparung ein dielektrisches Material des Radarsignalleiters. Das bedeutet, dass die Aussparung das dielektrische Material der Radarsignalleiter freilässt, sodass sich im Bereich der Aussparung vorzugsweise das gleiche Medium wie im Zwischenraum befindet, also bspw. ein Gas, ein Gasgemisch oder ein Fluid, bzw. ein Vakuum. Das ausgesendete Radarsignal kann über die Aussparung in den Radarsignalleiter eingekoppelt werden, wo es eine ausbreitungsfähige Wellenleitermode anregt.

Gemäß der Erfindung ist die Aussparung oberhalb einer Antennenstruktur der Radarsignalquelle angeordnet. Die Antennenstruktur ist dazu eingerichtet das Radarsignal auszusenden und/oder zu empfangen. Je höher der Frequenzbereich, desto kleiner kann die Antennenstruktur ausgebildet werden. Dies ist insbesondere dann von Vorteil, wenn die Antennenstruktur direkt auf der Radarsignalquelle angebracht wird, da die Kosten für die als Die ausgeführte Radarsignalquelle von deren Größe abhängen und wesentlich zu den Kosten des Radarmoduls beitragen. Die Position der Aussparung oberhalb der Antennenstruktur ist abhängig von dem zu übertragenden Radarsignal und kann die Polarisation der Wellenleitermode im Radarsignalleiter bestimmen. Die Antennenstruktur kann unterschiedlich ausgebildet sein. So kann die Antennenstruktur gemäß einer Ausführungsform als ein Patchelement ausgebildet sein. Zusätzlich oder alternativ kann die Antennenstruktur, insbesondere in Abhängigkeit des erzeugten Signaltyps, unterschiedlich geformt sein. Die als Patchelement ausgebildete Antennenstruktur kann bspw. mit einem unsymmetrischen Signal angeregt werden. Symmetrische Signale können bspw. sogenannte Bow-Tie-Antennen anregen.

Gemäß einer Ausführungsform weist die Radarsignalquelle ferner eine Hochfrequenzschaltung auf, die die Antennenstruktur mit einem, insbesondere hochfrequenten, elektrischen Signal beaufschlagt. Das aus dem elektrischen Signal resultierende elektromagnetische Feld wird von der Antennenstruktur als Radarsignal ausgesendet. Für die höheren Frequenzbereiche, insbesondere größer 120 GHz, ist es sinnvoll, die Antennenstruktur zusätzlich zur aktiven Hochfrequenzschaltung direkt auf dem Die anzuordnen, um Leitungsverluste, die man über Bonddrähte und/oder Leiterplattensubstrate erfahren würde, zu vermeiden.

Gemäß der Erfindung ist die Aussparung schlitzartig, insbesondere rechteckig, ausgebildet. Eine schlitzartige, rechteckige Aussparung weist ein Feldbild auf, das einem Feldbild einer in einem dielektrischen Wellenleiter ausbreitungsfähigen Mode ähnelt. Gemäß weiterer Ausrührungsformen kann die Aussparung auch beliebige andere Formen aufweisen.

Gemäß einer weiteren Ausführungsform ist die metallische Schicht an der der Radarsignalquelle zugewandten Stirnfläche in Form eines metallischen Patches aufgebracht. Metallische Patches sind vorzugsweise rechteckig, quadratisch, oder rund, und werden insbesondere aufgedampft oder geklebt. Ein metallischer Patch kann insbesondere dann eingesetzt werden, wenn die der Radarsignalquelle zugewandte Stirnfläche des Radarsignalleiters überwiegend frei von Metall sein soll. Mit anderen Worten kann ein metallischer Patch insbesondere dann verwendet werden, wenn die metallische Schicht an der Stirnfläche weniger als 75%, unter Umständen sogar weniger als 65%, oder weniger als 50% der Stirnfläche bedecken soll.

Gemäß einer Ausführungsform ist ferner ein zusätzlicher Wellenleiter vorgesehen, der als ein metallischer Hohlleiter oder als ein nicht-metallischer, also dielektrischer, Wellenleiter ausgebildet ist, und zwischen dem Radarsignalleiter und der Antenne angeordnet ist. Die Einkopplung des. insbesondere hochfrequenten, Radarsignals in einen metallischen Hohlleiter hat den Vorteil, dass keine unerwünschte Abstrahlung der elektromagnetischen Wellen in beliebige Raumrichtungen stattfindet. Ein nicht-metallischer Wellenleiter besitzt ab etwa 150 GHz geringere Dämpfungseigenschaften als ein metallischer Wellenleiter. Darüber hinaus können nicht-metallische Wellenleiter als Potentialtrennung eingesetzt werden, da so keine metallische Verbindung zwischen der Antenne und der Elektronik notwendig ist. Ferner können die nicht-metallischen Wellenleiter insbesondere im hohen Frequenzbereich leichter in längeren Stücken hergestellt werden.

Gemäß einer Ausführungsform umgibt der metallische Hohlleiter den Radarsignalleiter zumindest teilweise, um das Radarsignal von dem Radarsignalleiter in den Hohlleiter einzukoppeln, wobei der Hohlleiter mit der Antenne, bspw. einer Hornantenne, verbunden, vorzugsweise integral einstückig ausgeführt, ist. Über die Antenne wird das Radarsignal abgestrahlt bzw. empfangen. Die Antenne kann ferner eine dielektrische Linse aufweisen. Die Linse dient dazu, das Messsignal zu fokussieren.

Gemäß einer Ausführungsform ist die Radarsignalquelle auf einem Trägermaterial von diesem mechanisch entkoppelt, vorzugsweise mittels einer Klebschicht, befestigt. Dadurch kann gewährleistet werden, dass mechanische Belastungen, die ggf. auf das Trägermaterial wirken, nicht auf die Radarsignalquelle übertragen werden. Insbesondere kann das Trägermaterial ein Leiterplattensubstrat oder ein Träger eines Standard-Chip Package sein. Alternativ kann die Radarsignalquelle auf das Trägermaterial gelötet werden, wenn die Radarsignalquelle und das Trägermaterial ähnlich Temperaturausdehnungskoeffizienten aufweisen, um temperaturbedingte mechanische Spannungen zu vermeiden.

Gemäß einer Ausführungsform ist das Trägermaterial ferner mittels zumindest einem Bonddraht mit der Radarsignalquelle verbunden, wobei der Bonddraht als niederfrequente Versorgungs- und/oder Signalleitung dient. Zusätzlich oder alternativ können auch Bondpads eingesetzt werden. Bonddrähte sowie Bondpads dienen dazu, eine Versorgungsspannung, Signalleitungen, Steuerleitungen etc. vom Die herunterzuführen.

Gemäß einer weiteren Ausführungsform ist das metallische Gehäuse an dem Trägermaterial befestigt, vorzugsweise verklebt, verlötet, verschraubt etc., und/oder mit dem Trägermaterial leitend verbunden. Insbesondere kann das metallische Gehäuse die Radarsignalquelle vollständig umgeben. Dadurch ist die Radarsignalquelle geschützt und keinen Umwelteinflüssen, wie Staub, Feuchtigkeit etc. ausgesetzt. Ferner können so unerwünschte elektromagnetische Ab- und Einstrahlungen vermieden werden.

Gemäß einer Ausführungsform ist der Radarsignalleiter mittels einer metallischen Halterung, die vorzugsweise integral einstückig mit dem metallischen Gehäuse der Radarsignalquelle ausgebildet ist, mechanisch gehalten, wobei der Radarsignalleiter mit der Halterung bspw. verpresst, verlötet, verklebt etc. ist.

Gemäß einer weiteren Ausführungsform ist der Radarsignalleiter mittels einer dielektrischen Halterung, die vorzugsweise in dem metallischen Gehäuse der Radarsignalquelle angeordnet ist, mechanisch gehalten, wobei die Permittivität der Halterung kleiner ist als die Permittivität des Radarsignalleiters. Durch die kleinere Permittivität der dielektrischen Halterung kann die Funktionalität der Wellenleitung des Radarsignalleiters gewährleistet werden. Der Unterschied in der Permittivität der beiden Elemente kann dabei so gewählt werden, dass das Radarsignal innerhalb des Radarsignalleiters bleibt, da es an der Grenzfläche der beiden Elemente aufgrund des Permittivitätsunterschieds immer in den Radarsignalleiter hineingelenkt wird.

Gemäß einer Ausführungsform ist ein der Radarsignalquelle abgewandtes Ende des Radarsignalleiters kegelförmig, kegelstumpfförmig, paraboloidal oder halbkugelförmig ausgebildet. Die Formgebung dieses Endes des Radarsignalleiters kann an die Auskoppelart angepasst werden. So eignet sich z.B. für einen Hohlleiter insbesondere ein Kegel oder ein Kegelstumpf als Formgebung für dieses Ende des Radarsignalleiters. Für die Einkopplung in einen weiteren dielektrischen Wellenleiter, ebenso wie für eine Abstrahlung in Luft, kann sich insbesondere eine Halbkugel als Formgebung eignen. Durch die Formgebung kann sich die Welle ablösen und in den Hohlleiter etc. überführt werden.

Gemäß einer Ausführungsform ist ein Querschnitt des Radarsignalleiters rund, quadratisch, rechteckig, oval oder elliptisch. Vorzugsweise wird der Querschnitt des Radarsignalleiters so gewählt, dass die im Wellenleiter angeregte Mode entweder ausgekoppelt oder in einen anderen Wellenleiter überführt werden kann. Gemäß einer Ausführungsform weist der aufgesetzte Wellenleiter/Hohlleiter einen beliebigen anderen Querschnitt auf. Runde Geometrien sind besonders einfach zu fertigen. Rechteckige Geometrien eignen sich dazu, die Polarisation der Welle zu erhalten.

Ein weiterer Aspekt der Offenbarung betrifft ein Füllstandradar mit einem vorstehend und im Folgenden beschriebenen Radarmodul.

Ein weiterer Aspekt der Erfindung betrifft eine Verwendung eines vorstehend und im Folgenden beschriebenen Radarmoduls zur Prozessautomatisierung oder Überwachung eines Raumbereichs anstelle einer Lichtschranke.

Die vorstehend für das offenbarte Radarmodul angegebenen Vorteile gelten auch für das offenbarte Füllstandradar sowie für die offenbarte Verwendung, und werden zur Vermeidung von Wiederholungen nicht noch einmal angegeben.

Im Folgenden werden mit Verweis auf die Figuren weitere Ausführungsformen beschrieben. Die Darstellung in den Figuren ist schematisch und nicht maßstabsgetreu. Die gleichen oder ähnlichen Elemente werden mit den gleichen Bezugszeichen versehen.

### Kurze Beschreibung der Figuren

Fig. 1 zeigt eine schematische Schnittdarstellung eines Ausschnitts eines Radarmoduls gemäß einer beispielhaften Ausführungsform.
Fig. 2 zeigt eine schematische Schnittdarstellung eines Radarmoduls gemäß einer beispielhaften Ausführungsform.
Fig. 3 zeigt eine schematische Schnittdarstellung eines Radarmoduls gemäß einer beispielhaften Ausführungsform.
Fig. 4 zeigt eine schematische Schnittdarstellung eines Radarmoduls gemäß einer beispielhaften Ausführungsform.
Fig. 5 zeigt eine schematische Darstellung eines Radarsignalleiters gemäß einer beispielhaften Ausführungsform.
Fig. 6 zeigt eine schematische Darstellung einer Radarsignalquelle gemäß einer Ausführungsform.
Fig. 7a zeigt eine schematische Darstellung einer Radarsignalquelle gemäß einer Ausführungsform.
Fig. 7b zeigt eine schematische Darstellung einer Positionierung des Radarsignalleiters aus Fig. 5 oberhalb der Radarsignalquelle aus Fig. 7a.

### Detaillierte Beschreibung von Ausführungsformen

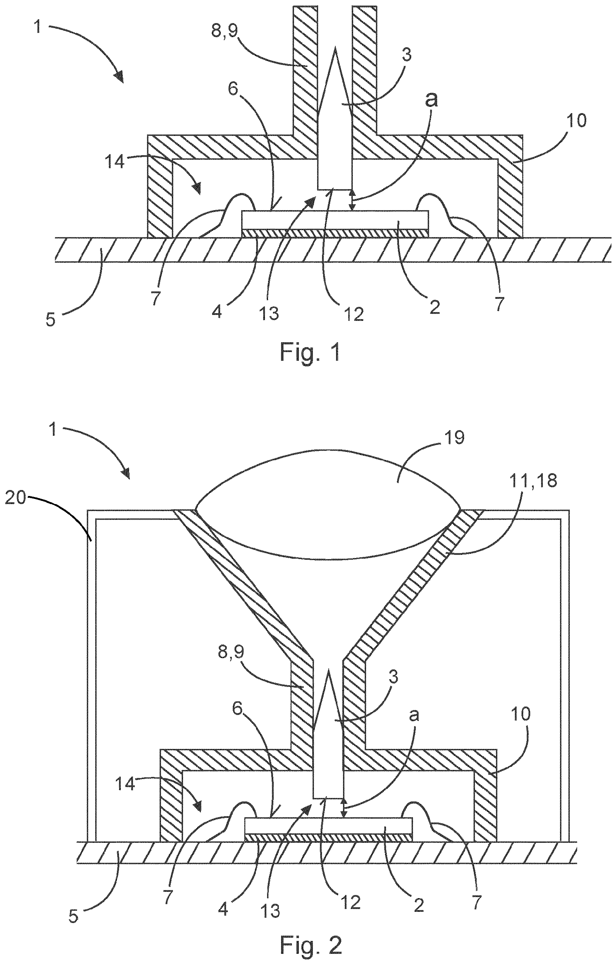

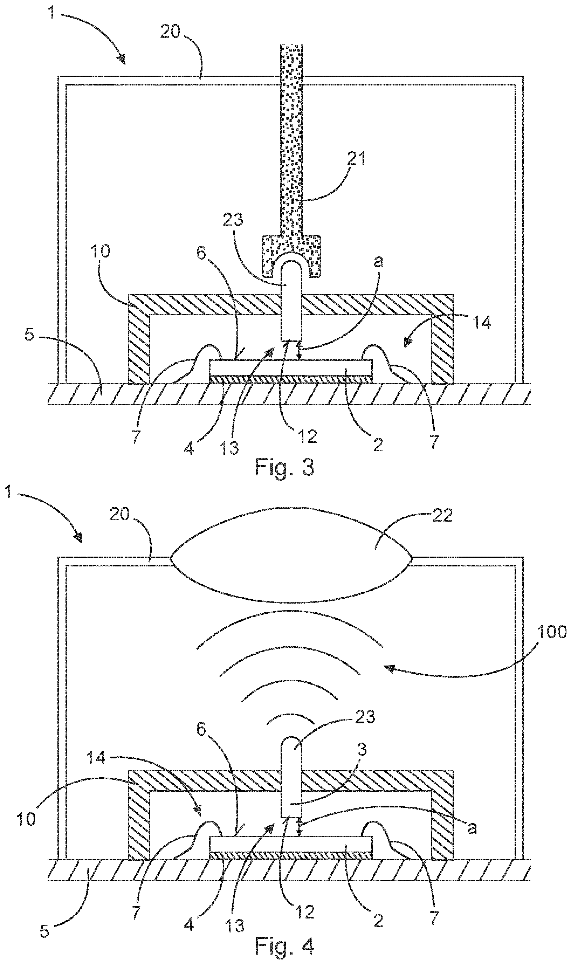

Fig. 1 zeigt einen Ausschnitt eines Radarmoduls 1 gemäß einer beispielhaften Ausführungsform in einer Schnittdarstellung. Das Radarmodul 1 weist eine Radarsignalquelle 2 und einen dielektrischen Radarsignalleiter 3 auf. Die Radarsignalquelle 2 ist dazu ausgelegt, ein Radarsignal 100 (siehe Fig. 4) zu erzeugen und auszusenden und/oder zu empfangen. Der Radarsignalleiter 3 ist dazu ausgelegt, das Radarsignal 100 von der Radarsignalquelle 2 zu empfangen und an eine Antenne 11 (siehe Fig. 2) weiterzuleiten und/oder ein Radarsignal von der Antenne 11 an die Radarsignalquelle 2 weiterzuleiten. Das Radarsignal 100 ist insbesondere ein hochfrequentes Radarsignal in einem Frequenzbereich von 100 GHz bis 500 GHz, vorzugsweise von 150 GHz bis 300 GHz, besonders bevorzugt von 180 GHz bis 280 GHz.

Die Radarsignalquelle 2 weist einen ungehäusten Teil eines Halbleiter-Wafers, einen sogenannter Die, auf und ist mittels einer Klebschicht 4 auf einem Trägermaterial 5 angebracht. Das Trägermaterial 5 ist als ein Leiterplattensubstrat ausgeführt und kann bspw. auf Papier, Glasfaser, Glasvlies Keramik, Teflon etc. basieren, wobei Leiterplattensubstrate für den Hochfrequenzbereich bevorzugt auf Keramik oder Teflon basieren. Eine Oberfläche 6 der Radarsignalquelle 2 ist mittels Bonddrähten 7 leitend mit dem Trägermaterial 5 verbunden. Die Bonddrähte 7 dienen insbesondere als niederfrequente Versorgungs- und Signalleitungen, bspw. für eine Versorgungsspannung, Steuerleitungen etc.

Der dielektrische Radarsignalleiter 3 ist mit einem Abstand a beabstandet zu der Oberfläche 6 der Radarsignalquelle 2 angeordnet und ist zumindest teilweise in einem Hohlleiter 8 mittels Verpressen, Verlöten oder Verkleben aufgenommen, und wird von diesem mechanisch gehalten. Somit dient der Hohlleiter 8 in dieser beispielhaften Ausführungsform als Halterung 9 für den Radarsignalleiter 3. Darüber hinaus ist der Hohlleiter 8 integral einstückig mit einem metallischen Gehäuse 10 ausgebildet.

Das metallische Gehäuse 10 ist auf dem Trägermaterial 5 abgestützt und mit diesem leitfähig verbunden. Dabei ist das metallische Gehäuse 10, bspw. über Kleben, Löten oder Schrauben an dem Trägermaterial 5 befestigt. Durch diese Anordnung ist der Hohlleiter 8 und ggf. daran angebundene weitere Elemente, bspw. eine Antenne 11 (siehe Fig. 2) über das metallische Gehäuse 10 auf dem Trägermaterial abgestützt, und mögliche Kräfte, die auf den Hohlleiter 8 und/oder die Antenne 11 wirken, werden von dem Gehäuse 10 direkt auf das Trägermaterial 5, und nicht auf die Radarsignalquelle 2, übertragen.

Darüber hinaus umgibt das metallische Gehäuse 10 die Radarsignalquelle 2, wodurch diese vor Umwelteinflüssen, wie Staub, Feuchtigkeit etc. geschützt ist. Zusätzlich können durch das metallische Gehäuse 10 unerwünschte elektromagnetische Ab- und Einstrahlungen zumindest reduziert oder ganz vermieden werden.

Der dielektrische Radarsignalleiter 3 ist in dieser beispielhaften Ausführungsform im Wesentlichen zylindrisch oder stiftartig ausgebildet und kann auch als ein Einkoppelstift bezeichnet werden. Der Radarsignalleiter 3 ist derart angeordnet, dass eine an einem Längsende befindliche Stirnfläche 12 der Radarsignalquelle 2 zugewandt angeordnet ist. Der Abstand a zwischen der Oberfläche 6 der Radarsignalquelle 2 und der Stirnfläche 12 des Radarsignalleiters 3 ist in Abhängigkeit von dem Frequenzbereich des zu übertragenden Radarsignals definiert und dient unter anderem dazu, den Radarsignalleiter 3 von der Radarsignalquelle 2 mechanisch zu entkoppeln. Das bedeutet, dass mechanische Belastungen, bspw. durch auf den Radarsignalleiter 3 einwirkende Kräfte, nicht auf die Radarsignalquelle 2 übertragen werden. Dadurch ist die sehr brüchige und spröde Radarsignalquelle 2 vor mechanischen Belastungen geschützt.

Ein durch den Abstand a ausgebildeter Zwischenraum 13 ist hier beispielhaft mit Luft gefüllt. Alternativ kann der Zwischenraum 13 und optional auch der durch das Gehäuse 10 gebildete Innenraum 14 mit einem anderen dielektrischen Gas oder Gasgemisch, mit einer dielektrischen Flüssigkeit, oder mit einem Vakuum gefüllt sein, solange die mechanische Entkopplung der Radarsignalquelle 2 und des Radarsignalleiters 3 im Wesentlichen erhalten bleibt.

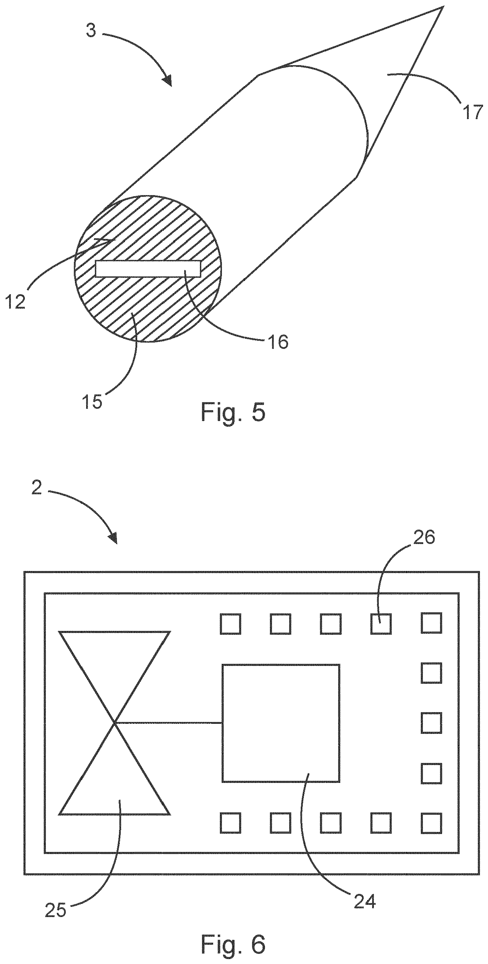

Mit Bezug auf Fig. 5 ist der Radarsignalleiter 3 in einer beispielhaften Ausführungsform gezeigt. Die der Radarsignalquelle 2 zugewandte Stirnfläche 12 des Radarsignalleiters 3 weist zumindest teilweise eine metallische Schicht 15 auf, die von einer metallfreien Aussparung 16 unterbrochen ist. In Fig. 5 ist die Aussparung 16 schlitzartig und im Wesentlichen rechteckig ausgebildet. Die metallfreie Aussparung 16 definiert einen Bereich, in dem das von der Radarsignalquelle 2 ausgesendete Radarsignal 100 in den Radarsignalleiter 3 eingekoppelt wird. Die metallische Schicht 15 dient als Abschirmung, sodass das Radarsignal 100 im Bereich der metallischen Schicht 15 nicht in den Radarsignalleiter 3 eingekoppelt werden kann.

Der Radarsignalleiter 3 hat vorzugsweise einen runden Querschnitt. Alternativ kann der Radarsignalleiter 3 einen quadratischen, rechteckigen, ovalen oder elliptischen Querschnitt aufweisen. Ein runder Querschnitt ist insbesondere einfach zu fertigen. Ein Radarsignalleiter 3 mit einem rechteckigen Querschnitt kann die Polarisation des Radarsignals 100 aufrechterhalten.

Es ist zu beachten, dass sich im Falle einer Radarsignalübertragung von der Antenne 11 zur Radarsignalquelle 2 die Richtungen umgekehrt verhalten. Das bedeutet in diesem Fall, dass das Radarsignal im Bereich der Aussparung 16 aus dem Radarsignalleiter 3 in Richtung der Radarsignalquelle 2 ausgekoppelt wird, und die metallische Schicht 15 die Auskopplung des Radarsignals aus dem Radarsignalleiter 3 in einem anderen Bereich der Stirnfläche 12 als der Aussparung 16 verhindert.

Ein von der Radarsignalquelle 2 abgewandtes Längsende des Radarsignalleiters 3 ist hier beispielhaft spitz zulaufend, also kegelförmig ausgeführt. Die Kegelform 17 siehe Fig. 5 oder eine Kegelstumpfform (nicht gezeigt) eignet sich insbesondere für eine Übertragung des Radarsignals 100 zwischen dem Radarsignalleiter 3 und dem Hohlleiter 8, wie in Fig. 1 beispielhaft gezeigt.

Fig. 2 zeigt eine beispielhafte Ausführungsform des Radarmoduls 1, die im Wesentlichen mit dem in Fig. 1 gezeigten Ausführungsbeispiel übereinstimmt, weshalb auf die Gemeinsamkeiten nicht nochmals näher eingegangen wird. Die in Fig. 2 gezeigte beispielhafte Ausführungsform unterscheidet sind von Fig. 1 im Wesentlichen dadurch, dass an dem Hohlleiter 8 zusätzlich eine als eine Hornantenne 18 ausgebildete Antenne 11 angeordnet ist. Der Hohlleiter 8 und die Hornantenne 18 sind integral einstückig ausgebildet. Über die Hornantenne 18 kann das Radarsignal abgestrahlt bzw. empfangen werden. Die Hornantenne 18 ist ferner mit einer dielektrischen Linse 19 versehen, die dazu dient, das Radarsignal nach außen an die Umgebung abzugeben und es ermöglicht die Hornantenne 18 kürzer auszubilden als ohne die Linse 19. Die Linse 19 weist eine relative Permittivität größer als 1 auf, wodurch die elektromagnetischen Wellen so abgelenkt werden, dass eine Strahlbündelung entsteht. Darüber hinaus ist in Fig. 2 ein Radarmodulgehäuse 20 dargestellt, welches bis auf die Antenne 18 das gesamte Radarmodul 1 umgibt. Im Bereich der Antenne 18 dient die Linse 19 dazu, das Radarmodul 1 nach außen hin abzudichten und so vor äußeren Einflüssen, wie Dreck, Staub, Feuchtigkeit, aggressive Medien etc. zu schützen.

Fig. 3 und Fig. 4 zeigen jeweils eine weitere beispielhafte Ausführungsform des Radarmoduls 1, wobei das Radarsignal 100 in Fig. 3 von dem Radarsignalleiter 3 in einen weiteren dielektrischen Wellenleiter 21 übertragen wird und in Fig. 4 von dem Radarsignalleiter 3 an die Umgebung abgegeben wird.

Der Radarsignalleiter 3 wird in diesen beispielhaften Ausführungsformen von dem metallischen Gehäuse 10 in Position gehalten. Alternativ kann der Radarsignalleiter 3 auch von einer Halterung aus einem dielektrischen Material (nicht dargestellt) gehalten werden, die bspw. in dem metallischen Gehäuse 10 aufgenommen ist. Die dielektrische Halterung weist vorzugsweise eine relative Permittivität auf, die kleiner ist als die relative Permittivität des Radarsignalleiters 3, um die Funktionalität der Radarsignalweiterleitung aufrechtzuerhalten. Der Radarsignalleiter 3 kann bspw. im Wesentlichen PEEK aufweisen und somit eine relative Permittivität von etwa 3,2 besitzen. Die dielektrische Halterung kann bspw. im Wesentlichen Teflon aufweisen und somit eine relative Permittivität von etwa 2 haben.

In Fig. 3 kann der dielektrische Wellenleiter 21 das Radarsignal 100 entweder an eine Antenne 11 übertragen oder direkt nach außen abstrahlen und/oder empfangen. Der dielektrische Wellenleiter 21 kann den gleichen oder einen anderen Querschnitt aufweisen als der Radarsignalleiter 3. In Fig. 4 befindet sich eine dielektrische Linse 22 in einem vorbestimmten Abstand zum Radarsignalleiter 3, die von dem von dem dielektrischen Wellenleiter 21 abgestrahlten an die Luft abgegebenen Radarsignal 100 ausgeleuchtet wird. Für die dielektrische Linse 23 sind verschiedene Linsengeometrien denkbar, wobei sich parabelförmige Linsengeometrien als besonders vorteilhaft gezeigt haben.

In den Fign. 3 und 4 ist das der Radarsignalquelle 2 abgewandte Längsende des Radarsignalleiters 3 als eine Halbkugel 23 ausgebildet. Die Halbkugelform hat sich für die Einkopplung des Radarsignals 100 in den dielektrischen Wellenleiter 21 sowie für die Abstrahlung in Luft als besonders vorteilhaft gezeigt.

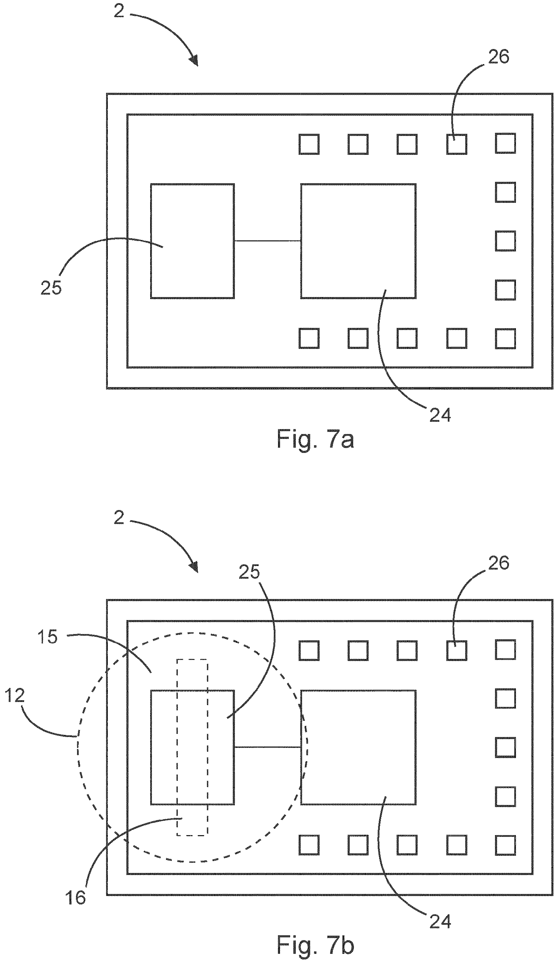

Die Fign. 6, 7a und 7b zeigen verschiedene beispielhafte Ausführungsformen der Radarsignalquelle 2. Die Radarsignalquelle 2 weist eine Hochfrequenzschaltung 24, eine Antennenstruktur 25 sowie mehrere Bondpads 26 auf. Insbesondere für die Übertragung von Radarsignalen in einem hochfrequenten Bereich, bspw. in einem Frequenzbereich ab etwa 120 GHz ist es sinnvoll die Antennenstruktur 25 zusätzlich zur Hochfrequenzschaltung 24 auf der Oberfläche 6 der Radarsignalquelle 2 anzuordnen, bzw. zu integrieren, da in diesem Frequenzbereich die Verluste bei einer Übertragung über einen Bonddraht bzw. Bondpads und das Trägermaterial erheblich groß sind. Da die Antennenstruktur 25 aufgrund ihrer Abhängigkeit von der Wellenlänge des Radarsignals 100 in diesem Frequenzbereich klein sind, kann die Antennenstruktur 25 gut auf der Oberfläche 6 der Radarsignalquelle 2 integriert werden, ohne die Radarsignalquelle 2 wesentlich zu vergrößern.

Die Antennenstruktur 25 ist mit der Hochfrequenzschaltung 24 gekoppelt und kann unterschiedlich ausgebildet sein. Zum Beispiel kann die Antennenstruktur 25, wie in Fig. 6 dargestellt, als eine Bow-Tie-Antenne ausgebildet sein, die eine sanduhrartige Kontur besitzt. Bow-Tie-Antennen werden vorzugsweise über symmetrische Signale angeregt. Alternativ kann die Antennenstruktur 25 auch rechteckig ausgeführt sein und/oder bspw. als ein Patchelement ausgebildet sein. Rechteckige Antennen werden vorzugsweise über unsymmetrische Signale angeregt. Die Größe des Patchelements wird durch die Wellenlänge des Signals definiert. Die Größe des Patchelements wird dabei so gewählt, dass das Patchelement durch das, insbesondere hochfrequente, Radarsignal und dessen Wellenlänge in Resonanz versetzt wird, also angeregt wird. Hierfür ist hauptsächlich die lange Kante des rechteckigen Patchelements ausschlaggebend. In Fig. 7b ist die Position des Radarsignalleiters 3 relativ zur Radarsignalquelle 2 mittels gestrichelt dargestellten Konturen abgebildet. Hier ist zu erkennen, dass die Stirnfläche 12 des Radarsignalleiters 3 oberhalb der Antennenstruktur 25 angeordnet ist. Dabei ist die Position der Aussparung 16 relativ zur Antennenstruktur 25 genau festgelegt, um ein Einkoppeln des von der Radarsignalquelle 2 ausgesendeten Radarsignals 100 in den Radarsignalleiter 3 sicherzustellen.

Eine rechteckige Aussparung 16, wie in Fig. 7b gezeigt, eignet sich insbesondere, weil das Feldbild einer solchen rechteckigen, schlitzartigen Aussparung 16 dem Feldbild einer in einem dielektrischen Radarsignalleiter 3 ausbreitungsfähigen Mode ähnelt. Durch die Orientierung der rechteckigen Aussparung 16 relativ zur Antennenstruktur 25 kann die Polarisation der Mode im dielektrischen Radarsignalleiter 3 vorgegeben werden.

Gemäß einer beispielhaften Ausführungsform wird die Antennenstruktur 25 über die Hochfrequenzschaltung 24 mit einem, vorzugsweise hochfrequenten, elektrischen Signal beaufschlagt, um ein elektromagnetisches Feld in Form des Radarsignals 100 zu erzeugen. Das Radarsignal 100 wird durch den Zwischenraum 13, der ein dielektrisches Medium, vorzugsweise Luft, oder auch ein Vakuum enthalten kann, zum Radarsignalleiter 3 übertragen, wo es an der Stirnfläche 12 über die Aussparung 16 eine ausbreitungsfähige Wellenleitermode anregt. Die Wellenleitermode durchläuft dann den Radarsignalleiter 13 bis sie sich am anderen Ende des Radarsignalleiters 3 über die dort entsprechend ausgebildete Geometrie ablöst. Das bedeutet, in der in Fig. 1 gezeigten Ausführungsform löst sich die Wellenleitermode über den Kegel 17 von dem Radarsignalleiter 3 ab, in den Hohlleiter 8 hinein, und ist ab dort als eine Hohlleitermode ausbreitungsfähig. In den in Fig. 3 bzw. Fig. 4 gezeigten Ausführungsformen löst sich die Wellenleitermode über die Halbkugel 23 ab und geht in den dielektrischen Wellenleiter 21 bzw. in die Luft über.

Es ist zu beachten, dass mit Bezug auf die Figuren die Radarsignalweiterleitung von der Radarsignalquelle 2 ausgehend zur Antenne 11, bzw. nach außen an die Umgebung hin beschrieben wurde. Jedoch ist das Radarmodul 1 auch dazu ausgelegt, ein Radarsignal, welches von außen, bspw. durch die Antenne 11, empfangen wird, an die Radarsignalquelle 2 weiterzuleiten.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarmodul (1) für die Prozessautomatisierung, insbesondere für die Prozessmesstechnik und die Automatisierungsindustrie, aufweisend:
eine Radarsignalquelle (2), die dazu eingerichtet ist, ein, insbesondere hochfrequentes, Radarsignal (100) zu erzeugen und auszusenden und/oder zu empfangen,
einen dielektrischen Radarsignalleiter (3), der dazu eingerichtet ist, das Radarsignal (100) aufzunehmen und dann an eine Antenne (11), Hohlleiter und/oder eine dielektrische Linse (19, 22) auszusenden, und/oder der dazu eingerichtet ist, das von der Antenne und/oder der dielektrischen Linse empfangene Radarsignal an die Radarsignalquelle weiterzuleiten,
wobei der Radarsignalleiter (3) unter Ausbildung eines Zwischenraums (13) in einem vorbestimmten Abstand (a) zur Radarsignalquelle (2) angeordnet ist und eine der Radarsignalquelle (2) zugewandte Stirnfläche (12) des Radarsignalleiters (3) zumindest teilweise eine metallische Schicht (15) aufweist;
wobei die metallische Schicht (15) an der der Radarsignalquelle (2) zugewandten Stirnfläche (12) eine Aussparung (16) in Form eines Schlitzes besitzt, die ein nicht-metallisches Material aufweist;
wobei die Aussparung (16) oberhalb einer Antennenstruktur (25) der Radarsignalquelle (2) angeordnet ist.

2. Radarmodul (1) nach Anspruch 1, wobei zumindest der Zwischenraum (13) ein Gas, ein Gasgemisch, ein Fluid oder ein Vakuum aufweist.

3. Radarmodul (1) nach einem der Ansprüche 1 oder 2, wobei ferner ein zusätzlicher Wellenleiter vorgesehen ist, der als metallischer Hohlleiter (8) oder als ein nicht-metallischer Wellenleiter (21) ausgebildet ist und zwischen dem Radarsignalleiter (3) und der Antenne (11) angeordnet ist.

4. Radarmodul nach Anspruch 3, wobei der metallische Hohlleiter (8) den Radarsignalleiter (3) zumindest teilweise umgibt, um das Radarsignal (100) von dem Radarsignalleiter (3) in den Hohlleiter (8) einzukoppeln, wobei der Hohlleiter (8) mit der Antenne (11) verbunden, vorzugsweise integral einstückig ausgeführt, ist.

5. Radarmodul nach einem der vorhergehenden Ansprüche, wobei die Radarsignalquelle (2) auf einem Trägermaterial (5) von diesem mechanisch entkoppelt, vorzugsweise mittels einer Klebschicht, befestigt ist.

6. Radarmodul (1) nach Anspruch 5, wobei das Trägermaterial (5) ferner mittels zumindest einem Bonddraht (7) mit der Radarsignalquelle (2) leitend verbunden ist, der als niederfrequente Versorgungs- und/oder Signalleitung dient.

7. Radarmodul (1) nach Anspruch 5 oder 6, wobei ein metallisches Gehäuse (10) vorgesehen ist, das die Radarsignalquelle (2) im Wesentlichen vollständig umgibt und an dem Trägermaterial (5) befestigt und/oder mit dem Trägermaterial leitend verbunden ist.

8. Radarmodul (1) nach einem Anspruch 7, wobei der Radarsignalleiter (3) mittels einer metallischen Halterung (9), die vorzugsweise integral einstückig mit dem metallischen Gehäuse (10) der Radarsignalquelle (2) ausgebildet ist, mechanisch gehalten ist.

9. Radarmodul (1) nach Anspruch 7, wobei der Radarsignalleiter (3) mittels einer dielektrischen Halterung, die vorzugsweise in dem metallischen Gehäuse (10) der Radarsignalquelle (2) angeordnet ist, mechanisch gehalten ist, wobei die Permittivität der Halterung kleiner ist als die Permittivität des Radarsignalleiters (3).

10. Radarmodul (1) nach einem der vorhergehenden Ansprüche, wobei ein der Radarsignalquelle (2) abgewandtes Ende des Radarsignalleiters (3) kegelförmig, kegelstumpfförmig oder halbkugelförmig ausgebildet ist.

11. Radarmodul (1) nach einem der vorhergehenden Ansprüche, wobei ein Querschnitt des Radarsignalleiters (3) rund, quadratisch, rechteckig, oval oder elliptisch ist.

12. Füllstandradar mit einem Radarmodul (1) nach einem der Ansprüche 1 bis 11.

13. Verwendung eines Radarmoduls (1) nach einem der Ansprüche 1 bis 11 zur Prozessautomatisierung oder Überwachung eines Raumbereichs anstelle einer Lichtschranke.

## Claims

1. Radar module (1) for process automation, in particular for process measurement technology and the automation industry, comprising:
a radar signal source (2) which is configured to generate and transmit and/or receive a radar signal (100), in particular a high-frequency radar signal,
a dielectric radar signal conductor (3) which is configured to receive the radar signal (100) and then transmit it to an antenna (11), waveguide and/or dielectric lens (19, 22), and/or which is configured to forward the radar signal received by the antenna and/or dielectric lens to the radar signal source,
wherein the radar signal conductor (3) is arranged at a predetermined distance (a) from the radar signal source (2), forming an intermediate space (13), and an end face (12) of the radar signal conductor (3) facing the radar signal source (2) comprises at least partially a metallic layer (15);
wherein the metallic layer (15) has a recess (16) in the form of a slot on the end face (12) facing the radar signal source (2), which recess comprises a non-metallic material;
wherein the recess (16) is arranged above an antenna structure (25) of the radar signal source (2).

2. Radar module (1) according to claim 1, wherein at least the intermediate space (13) comprises a gas, a gas mixture, a fluid or a vacuum.

3. Radar module (1) according to one of claims 1 or 2, wherein furthermore an additional waveguide is provided, which is designed as a metallic waveguide (8) or as a non-metallic waveguide (21) and is arranged between the radar signal conductor (3) and the antenna (11).

4. Radar module according to claim 3, wherein the metallic waveguide (8) at least partially surrounds the radar signal conductor (3) in order to couple the radar signal (100) from the radar signal conductor (3) into the waveguide (8), wherein the waveguide (8) is connected to the antenna (11), preferably integrally formed in one piece.

5. Radar module according to one of the preceding claims, wherein the radar signal source (2) is mechanically decoupled from a carrier material (5), preferably by means of an adhesive layer.

6. Radar module (1) according to claim 5, wherein the carrier material (5) is furthermore conductively connected to the radar signal source (2) by means of at least one bonding wire (7), which serves as a low-frequency supply and/or signal line.

7. Radar module (1) according to claim 5 or 6, wherein a metallic housing (10) is provided which substantially completely surrounds the radar signal source (2) and is attached to the carrier material (5) and/or is conductively connected to the carrier material.

8. Radar module (1) according to claim 7, wherein the radar signal conductor (3) is mechanically held by means of a metallic holder (9), which is preferably integrally formed in one piece with the metallic housing (10) of the radar signal source (2).

9. Radar module (1) according to claim 7, wherein the radar signal conductor (3) is mechanically held by means of a dielectric holder, which is preferably arranged in the metallic housing (10) of the radar signal source (2), wherein the permittivity of the holder is smaller than the permittivity of the radar signal conductor (3).

10. Radar module (1) according to one of the preceding claims, wherein one end of the radar signal conductor (3) facing away from the radar signal source (2) is conical, frustoconical or hemispherical.

11. Radar module (1) according to one of the preceding claims, wherein a cross-section of the radar signal conductor (3) is round, square, rectangular, oval or elliptical.

12. Level radar with a radar module (1) according to any one of claims 1 to 11.

13. Use of a radar module (1) according to one of claims 1 to 11 for process automation or monitoring of a room area instead of a light barrier.

## Revendications

1. Module radar (1) pour l'automatisation de processus, en particulier pour la technique de mesure de processus et l'industrie de l'automatisation, comportant :
une source de signal radar (2), qui est conçue pour générer et émettre et/ou recevoir un signal radar (100), en particulier à haute fréquence,
un conducteur de signal radar diélectrique (3), qui est conçu pour recevoir le signal radar (100) et l'émettre ensuite vers une antenne (11), un guide d'ondes et/ou une lentille diélectrique (19, 22), et/ou qui est conçu pour transmettre le signal radar reçu par l'antenne et/ou la lentille diélectrique à la source de signal radar,
dans lequel le conducteur de signal radar (3) est disposé à une distance prédéterminée (a) de la source de signal radar (2) en formant un espace intermédiaire (13) et une face frontale (12) du conducteur de signal radar (3) tournée vers la source de signal radar (2) comporte au moins partiellement une couche métallique (15) ;
dans lequel la couche métallique (15) possède, sur la face frontale (12) tournée vers la source de signal radar (2), un évidement (16) sous la forme d'une fente, qui comporte un matériau non métallique ;
dans lequel l'évidement (16) est disposé au-dessus d'une structure d'antenne (25) de la source de signal radar (2).

2. Module radar (1) selon la revendication 1, dans lequel au moins l'espace intermédiaire (13) comporte un gaz, un mélange de gaz, un fluide ou un vide.

3. Module radar (1) selon l'une des revendications 1 ou 2, dans lequel il est prévu en outre un guide d'ondes supplémentaire qui est réalisé sous la forme d'un guide d'ondes métallique (8) ou d'un guide d'ondes non métallique (21) et qui est disposé entre le conducteur de signal radar (3) et l'antenne (11).

4. Module radar selon la revendication 3, dans lequel le guide d'ondes métallique (8) entoure au moins partiellement le conducteur de signal radar (3) pour injecter le signal radar (100) du conducteur de signal radar (3) dans le guide d'ondes (8), dans lequel le guide d'ondes (8) est relié à l'antenne (11), de préférence réalisé d'une seule pièce avec celle-ci.

5. Module radar selon l'une des revendications précédentes, dans lequel la source de signal radar (2) est fixée sur un matériau de support (5) en étant découplée mécaniquement de celui-ci, de préférence au moyen d'une couche adhésive.

6. Module radar (1) selon la revendication 5, dans lequel le matériau de support (5) est en outre relié de manière conductrice à la source de signal radar (2) au moyen d'au moins un fil de liaison (7) qui sert de ligne d'alimentation et/ou de signal à basse fréquence.

7. Module radar (1) selon la revendication 5 ou 6, dans lequel il est prévu un boîtier métallique (10) qui entoure sensiblement complètement la source de signal radar (2) et qui est fixé sur le matériau de support (5) et/ou relié de manière conductrice au matériau de support.

8. Module radar (1) selon la revendication 7, dans lequel le conducteur de signal radar (3) est maintenu mécaniquement au moyen d'un dispositif de maintien métallique (9), qui est de préférence réalisé d'une seule pièce avec le boîtier métallique (10) de la source de signal radar (2).

9. Module radar (1) selon la revendication 7, dans lequel le conducteur de signal radar (3) est maintenu mécaniquement au moyen d'un dispositif de maintien diélectrique, qui est de préférence disposé dans le boîtier métallique (10) de la source de signal radar (2), dans lequel la permittivité du dispositif de maintien est inférieure à la permittivité du conducteur de signal radar (3).

10. Module radar (1) selon l'une des revendications précédentes, dans lequel une extrémité du conducteur de signal radar (3) opposée à la source de signal radar (2) est réalisée en forme de cône, en forme de cône tronqué ou en forme de demi-sphère.

11. Module radar (1) selon l'une des revendications précédentes, dans lequel une section transversale du conducteur de signal radar (3) est ronde, carrée, rectangulaire, ovale ou elliptique.

12. Radar de niveau de remplissage comportant un module radar (1) selon l'une des revendications 1 à 11.

13. Utilisation d'un module radar (1) selon l'une des revendications 1 à 11 pour l'automatisation de processus ou la surveillance d'une zone spatiale à la place d'une barrière photoélectrique.
